# EUROPÄISCHE PATENTANMELDUNG

(11) **EP 1 180 667 A2**
(43) Veröffentlichungstag der Anmeldung: **20.02.2002**
(21) Anmeldenummer: 01114536.4
(22) Anmeldetag: 16.06.2001
(51) Int. Cl.: G01F 23/22

(54) **Sensor zur Bestimmung des Niveaus und der Temperatur einer Flüssigkeit**

(30) Priorität: 17.08.2000 DE 10040739
(71) Anmelder: Siemens Aktiengesellschaft, 80333 München (DE)
(72) Erfinder: Acht, Joachim, 65936 Frankfurt (DE); Schimmel, Ralf, 35789 Weilmünser (DE); Rother, Manfred, 58093 Hagen (DE); Stiller, Rudolf, 61138 Niederdorfelden (DE)
(74) Vertreter: Rassler, Andrea, Dipl.-Phys.

(57) **Zusammenfassung**

Ein Sensor zur Bestimmung des Niveaus und/oder der Temperatur einer Flüssigkeit, insbesondere in einem Kraftfahrzeug, hat ein längliches Gehäuses (1), in welchem alle erforderlichen Bauteile für die Temperaturmessung und Niveaumessung untergebracht sind. Diese Gehäuse (1) besteht aus zwei aufeinander liegenden Halbschalen (2, 3), von denen eine Halbschale (3) alle für die Niveaumessung erforderlichen Bauteile und die hierzu notwendige Verdrahtung und Heizdraht (21) und die andere Halbschale (2) alle für die Temperaturmessung erforderlichen Bauteile und die hierzu notwendige Verdrahtung aufweist.

## Beschreibung

Die Erfindung betrifft einen Sensor zur Bestimmung des Niveaus und/oder der Temperatur einer Flüssigkeit, insbesondere in einem Kraftfahrzeug, welcher in einem länglichen Gehäuse zur Bestimmung des Niveaus einen in Abhängigkeit vom Flüssigkeitsniveau über einen unterschiedlich großen Bereich von der Flüssigkeit gekühlten Heizdraht und zur Bestimmung der Temperatur ein auf Temperatur ansprechendes Sensorelement hat.

Sensoren der vorstehenden Art werden beispielsweise zur Ermittlung des Ölstandes und der Öltemperatur in der Ölwanne eines Kraftfahrzeugmotors benötigt und sind allgemein bekannt. Schwierigkeiten bereitet bei solchen Sensoren die Montage der erforderlichen Bauteile. Eine automatische Montage wird bisher dadurch ausgeschlossen, dass das Gehäuse des Sensors relativ lang ist und in ihm verschiedene Teile befestigt und miteinander verdrahtet werden müssen.

Zur Erleichterung der Montage ist es bei einem Füllstandsgrenzsensor bereits bekannt, das Gehäuse aus zwei in Längsrichtung geteilten, zusammensteckbaren Gehäusehälften zu bilden. Dieses Bauprinzip könnte man auch bei einem kombinierten Sensor zur Niveau- und Temperaturmessung anwenden, jedoch würde es sich dabei nachteilig bemerkbar machen, dass relativ viele Teile in dem Gehäuse angeordnet werden müssen, die sich bei der Montage gegenseitig behindern. Weiterhin wäre bei einer Fehlmontage beispielsweise ausschließlich im Bereich der Bauteile für die Niveaumessung jeweils der komplette Sensor unbrauchbar, weil solche Fehlmontagen sich in der Regel erst beim komplett montierten Sensor durch Messen feststellen lassen.

Der Erfindung liegt das Problem zugrunde, einen Sensor der eingangs genannten Art zur Bestimmung des Niveaus und der Temperatur einer Flüssigkeit zu entwickeln, der besonders einfach zu montieren und zu überprüfen ist.

Dieses Problem wird erfindungsgemäß dadurch gelöst, dass das Gehäuse aus zwei aufeinander liegenden Halbschalen gebildet ist, von denen eine Halbschale alle für die Niveaumessung erforderlichen Bauteile und die hierzu notwendige Verdrahtung und Heizdraht und die andere Halbschale alle für die Temperaturmessung erforderlichen Bauteile und die hierzu notwendige Verdrahtung aufweist.

Durch diese zweischalige Bauweise kann zunächst in einer Halbschale ein funktionstüchtiger Sensor für die Niveaumessung und in der anderen Halbschale ein funktionstüchtiger Sensor für die Temperaturmessung montiert werden. Die Funktionstüchtigkeit beider Baugruppen kann unabhängig voneinander überprüft werden, bevor man beide Halbschalen zu einem zylindrischen Gehäuse miteinander verbindet. Der erfindungsgemäße Sensor kann auch zur Messung nur des Niveaus oder nur der Temperatur verwendet werden. Durch die Erfindung wird es auch möglich, die Halbschale für die zur Temperaturmessung bestimmten Bauteile leer zu lassen, wenn man einen Sensor benötigt, der lediglich eine Niveaumessung ermöglichen soll. In einem solchen Fall kann die leere Halbschale als fluidisches Dämpfungselement für den Niveausensor dienen. Bei der erfindungsgemäßen Sensorgestaltung handelt es sich um eine Modulbauweise, wobei die beiden Halbschalenmodule unabhängig voneinander funktionstüchtig sind.

Zur weiteren Erleichterung der Montage ist es vorteilhaft, wenn die Halbschalen im oberen Bereich einen durchmessergrößeren Verbindungsbereich aufweisen, welcher mit einem Kontaktsockel verbunden wird.

Das Verbinden der von den beiden Halbschalen hochführenden Leiter mit den entsprechenden Leitern des Kontaktsockels kann noch nach dem Zusammenfügen des aus den beiden Halbschalen gebildeten Gehäuses und des Kontaktsockels erfolgen, wenn gemäß einer anderen Weiterbildung der Erfindung jeder Verbindungsbereich eine radiale Durchbrechung hat und elektrische Leiter sowohl von den Halbschalen als auch aus dem Kontaktsockel bis in den Bereich dieser Durchbrechungen ragen und dort miteinander verbunden sind.

Durch die Durchbrechungen wird es möglich, dass die Leiter im Bereich der Durchbrechungen durch jeweils eine Schweißung miteinander verbunden sind, weil durch sie eine Schweißvorrichtung die jeweiligen Verbindungsstellen erreichen kann.

Die beiden Halbschalen und der Verbindungsbereich werden zusätzlich im zusammengesetzten Zustand gegen ein Freikommen gesichert, wenn der Verbindungsbereich der beiden Halbschalen mit dem Kontaktsockel in ein Anschlussstück eingesetzt ist.

Der für die Niveaumessung erforderliche Heizdraht kann automatisch verlegt werden und wird zwangsläufig in gespannter Stellung gehalten, wenn gemäß einer anderen, besonders vorteilhaften Weiterbildung der Erfindung in der Halbschale für die zur Niveaumessung erforderlichen Bauteile ein Spannkörper in Haupterstreckungsrichtung der Halbschale verschieblich und durch eine Feder vom Verbindungsbereich weg vorgespannt angeordnet ist, welcher zum Umlenken und Zurückführen des Heizdrahtes einen vorspringenden Zapfen hat.

Die Verbindung zwischen den Halbschalen und dem Kontaktsockel kann sehr einfach gestaltet sein, weil nach der Montage das Anschlussstück alle Bauteile zusammenhält, wenn der Kontaktsockel an der den beiden Halbschalen zugewandten Seite in seiner Mantelfläche eine umlaufende Nut hat, in die der jeweilige Verbindungsbereich der Halbschalen mit einem radial nach innen gerichteten Bund eingreift.

Wenn der Sensor dazu bestimmt ist, in vertikaler Ausrichtung von oben her beispielsweise in eine Ölwanne eingeschraubt zu werden, dann kann man hierzu vorsehen, dass die für die Temperaturmessung bestimmte Halbschale in ihrem stirnseitigen, unteren Ende eine nach außen hin offene Ausnehmung für ein auf Temperatur ansprechendes Sensorelement hat. Hierdurch wird erreicht, dass sich das auf Temperatur ansprechende Sensorelement immer im Bereich der tiefsten Stelle der Ölwanne befindet, so dass es immer in Öl eingetaucht ist.

Es ist jedoch auch möglich, den Sensor so auszubilden, dass er senkrecht von unten her in die Ölwanne oder einen Behälter ragt, in welchem sich das zu messende Medium befindet, indem die für die Temperaturmessung bestimmte Halbschale nahe des Anschlussstückes in ihrer Mantelfläche eine nach außen hin offene Ausnehmung für ein auf Temperatur ansprechendes Sensorelement hat.

Die Erfindung lässt verschiedene Ausführungsformen zu. Zur weiteren Verdeutlichung ihres Grundprinzips sind zwei davon in der Zeichnung dargestellt und werden nachfolgend beschrieben. Diese zeigt in
- Fig.1: einen senkrechten Schnitt durch einen kompletten Sensor nach der Erfindung,
- Fig.2: einen senkrechten Schnitt durch den Sensor ohne eine für die Temperaturmessung bestimmte Halbschale,
- Fig.3: einen Querschnitt durch den Sensor nach Fig.1 entlang er Linie III - III in Figur 1,
- Fig.4: einen senkrechten Schnitt durch eine zweite Ausführungsform des Sensors.

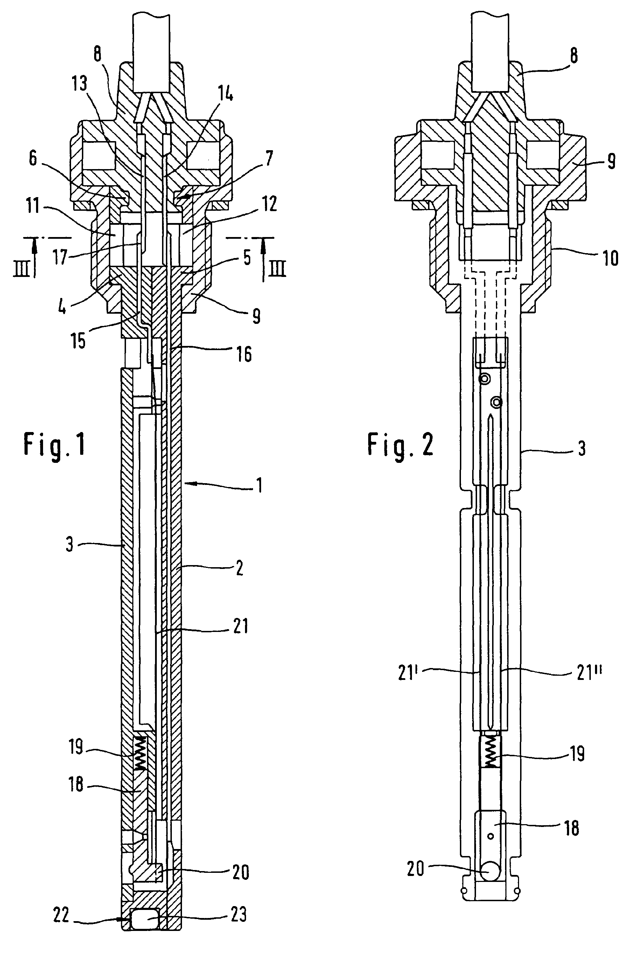

Wie die Figur 1 erkennen lässt, hat der Sensor ein Gehäuse 1 aus Kunststoff, welches aus zwei Halbschalen 2, 3 gebildet ist. Diese beiden Halbschalen 2, 3 haben jeweils im oberen Bereich einen im Durchmesser vergrößerten Verbindungsbereich 4, 5, der nahe seines oberen Endes mit einem nach innen gerichteten Bund 6 in eine umlaufende Nut 7 eines Kontaktsockels 8 eingreift. Das Gehäuse 1 ist zusammen mit dem Kontaktsockel 8 in ein Anschlussstück 9 eingesetzt, welches außenseitig mit einem Einschraubgewinde 10 versehen ist.

Die Figur 1 lässt weiterhin erkennen, dass jeder Verbindungsbereich 4, 5 eine radiale Durchbrechung 11, 12 hat. Bis in den Bereich dieser Durchbrechungen 11, 12 ragen vom Kontaktsockel 8 her Paare von elektrischen Leitern 13, 14 und vom Gehäuse 1 her Paare elektrischer Leiter 15, 16 und sind dort durch Schweißungen 17 miteinander verbunden.

In der Halbschale 3, welche für die Niveaumessung konzipiert ist, befindet sich nahe ihres unteren Endes ein Spannkörper 18, welcher in Längsrichtung der Halbschale 3 in ihr verschieblich gehalten und von einer Feder 19 vom Verbindungsbereich 4 weg vorgespannt ist. Dieser Spannkörper 18 hat einen Zapfen 20, durch den ein Heizdraht 21 um 180° umgelenkt wird, der in der Halbschale 3 über einen wesentlichen Bereich ihrer Länge verläuft und mit den beiden Leitern 15 verbunden ist. Dieser Heizdraht 21 ist bei der Niveaumessung stromdurchflossen. Er wird durch das zu messende Medium in Abhängigkeit vom Füllstand mehr oder weniger gekühlt, so dass sich sein elektrischer Gesamtwiderstand entsprechend ändert und dadurch auf elektrischem Wege der Füllstand ermittelt werden kann.

Die Halbschale 2 hat in ihrer unteren Stirnfläche eine Ausnehmung 22 mit einem auf Temperatur ansprechenden Sensorelement 23, beispielsweise ein NTC-Element oder ein PTC-Element. Dieses hat mit den Leitern 16 Verbindung und vermag dadurch Temperatursignale zu erzeugen.

Die Figur 2 zeigt die Halbschale 3 gegenüber Figur 1 um 90° gedreht. Zu erkennen ist wiederum der Spannkörper 18 mit dem Zapfen 20, welcher den Heizdraht 21 umlenkt. Zu sehen ist, dass der Heizdraht 21 u-förmig verläuft, wobei seine beiden jeweils einen Schenkel des U's bildenden Bereiche in Figur 2 mit 21' und 21" bezeichnet wurden.

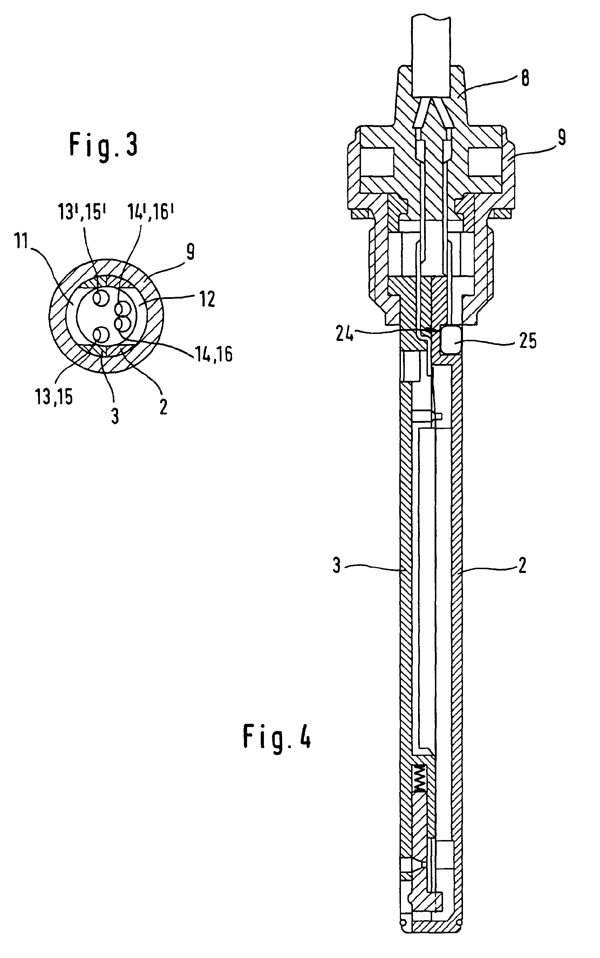

In Figur 3 sieht man innerhalb des Anschlussstückes 9 Bereiche der Halbschalen 2 und 3 mit der jeweiligen Durchbrechung 11, 12 und die aufeinander treffenden und dort miteinander verschweißten Leiter 13, 15 sowie 14, 16. Weiterhin sieht man die in Figur 1 nicht erkennbaren Leiter 13', 15' und 14' sowie 16'.

Die Ausführungsform gemäß Figur 4 unterscheidet sich von der nach Figur 1 dadurch, dass sich in der Mantelfläche der Halbschale 2 nahe des Anschlussstückes 9 eine Ausnehmung 24 mit einem auf Temperatur ansprechenden Sensorelement 25 befindet. Der Sensor nach Figur 4 ist zum Einbau in eine Ölwanne von ihrer unteren Seite her ausgebildet. Das Sensorelement 25 befindet sich bei einem solchen Einbau nahe der tiefsten Stelle der Ölwanne.

Zur Montage des erfindungsgemäßen Sensors werden zunächst alle Einbauteile in die beiden Halbschalen 2, 3 und den Kontaktsockel 8 eingebaut. Dann schweißt man eine Halbschale 2, 3 an den Kontaktsockel 8 und verbindet anschließend die andere Halbschale 2, 3 mit der ersten Halbschale 2, 3, beispielsweise durch Klipsen, Schweißen, Verstemmen oder Klammern. Danach verschweißt man sie ebenfalls mit dem Kontaktsockel 8. In der Endmontage wird die Einheit in das Anschlussstück 9 eingesetzt, welches integrierte Dichtscheiben aufweist, und anschließend zugerollt wird.

## Patentansprüche

1. Sensor zur Bestimmung des Niveaus und/oder der Temperatur einer Flüssigkeit, insbesondere in einem Kraftfahrzeug, welcher in einem länglichen Gehäuse zur Bestimmung des Niveaus einen in Abhängigkeit vom Flüssigkeitsniveau über einen unterschiedlich großen Bereich von der Flüssigkeit gekühlten Heizdraht und zur Bestimmung der Temperatur ein auf Temperatur ansprechendes Sensorelement hat, **dadurch gekennzeichnet, dass** das Gehäuse (1) aus zwei aufeinander liegenden Halbschalen (2, 3) gebildet ist, von denen eine Halbschale (3) alle für die Niveaumessung erforderlichen Bauteile und die hierzu notwendige Verdrahtung und Heizdraht (21) und die andere Halbschale (2) alle für die Temperaturmessung erforderlichen Bauteile und die hierzu notwendige Verdrahtung aufweist.

2. Sensor nach Anspruch 1, **dadurch gekennzeichnet, dass** die Halbschalen (2, 3) im oberen Bereich einen durchmessergrößeren Verbindungsbereich (4, 5) aufweisen, welcher mit einem Kontaktsockel (8) verbunden ist.

3. Sensor nach Anspruch 2, **dadurch gekennzeichnet, dass** jeder Verbindungsbereich (4, 5) eine radiale Durchbrechung (11, 12) hat und elektrische Leiter (13, 14, 15, 16) sowohl von den Halbschalen (2, 3) als auch aus dem Kontaktsockel (8) bis in den Bereich dieser Durchbrechungen (11, 12) ragen und dort miteinander verbunden sind.

4. Sensor nach Anspruch 3, **dadurch gekennzeichnet, dass** die Leiter (13, 14, 15, 16) im Bereich der Durchbrechungen (11, 12) durch jeweils eine Schweißung (17) miteinander verbunden sind.

5. Sensor nach zumindest einem der vorangehenden Ansprüche, **dadurch gekennzeichnet, dass** der Verbindungsbereich (4, 5) der beiden Halbschalen (2, 3) mit dem Kontaktsockel (8) in ein Anschlussstück (9) eingesetzt ist.

6. Sensor nach zumindest einem der vorangehenden Ansprüche, **dadurch gekennzeichnet, dass** in der Halbschale (3) für die zur Niveaumessung erforderlichen Bauteile ein Spannkörper (18) in Haupterstreckungsrichtung der Halbschale (3) verschieblich und durch eine Feder (19) vom Verbindungsbereich (4) weg vorgespannt angeordnet ist, welcher zum Umlenken und Zurückführen des Heizdrahtes (21) einen vorspringenden Zapfen (20) hat.

7. Sensor nach zumindest einem der vorangehenden Ansprüche, **dadurch gekennzeichnet, dass** der Kontaktsockel (8) an der den beiden Halbschalen (2, 3) zugewandten Seite in seiner Mantelfläche eine umlaufende Nut (7) hat, in die der jeweilige Verbindungsbereich (4, 5) der Halbschalen (2, 3) mit einem radial nach innen gerichteten Bund (6) eingreift.

8. Sensor nach zumindest einem der vorangehenden Ansprüche, **dadurch gekennzeichnet, dass** die für die Temperaturmessung bestimmte Halbschale (2) in ihrem stirnseitigen, unteren Ende eine nach außen hin offene Ausnehmung (22) für ein auf Temperatur ansprechendes Sensorelement (23) hat.

9. Sensor nach zumindest einem der vorangehenden Ansprüche, **dadurch gekennzeichnet, dass** die für die Temperaturmessung bestimmte Halbschale (2) nahe des Anschlussstückes (9) in ihrer Mantelfläche eine nach außen hin offene Ausnehmung (24) für ein auf Temperatur ansprechendes Sensorelement (25) hat.
